(19) Europäisches Patentamt
European Patent Office
Office européen des brevets

(11) EP 0 579 538 B1

(12) **FASCICULE DE BREVET EUROPEEN**

(45) Date de publication et mention de la délivrance du brevet:
**05.02.1997 Bulletin 1997/06**

(51) Int. Cl.$^6$: **C04B 24/12**

(21) Numéro de dépôt: **93401807.8**

(22) Date de dépôt: **12.07.1993**

(54) **Utilisation d'agent augmentant la vitesse de durcissement des ciments, des mortiers et des bétons tout en maintenant leur maniabilité.**

Verwendung von Mitteln zum Beschleunigen die Härtungsgeschwindigkeit von Zement, Mörtel und Beton, unter beibehaltung ihrer Bearbeitbarkeit.

Use of an agent increasing the hardening rate of cements, mortars and concretes, while maintaining their workability.

(84) Etats contractants désignés:
**AT BE CH DE ES FR GB IT LI NL**

(30) Priorité: **15.07.1992 FR 9208746**

(43) Date de publication de la demande:
**19.01.1994 Bulletin 1994/03**

(73) Titulaire: **Roquette Frères**
**F-62136 Lestrem (FR)**

(72) Inventeurs:
- **Gosset, Serge**
  **F-62136 Lestrem (FR)**
- **Videau, Didier**
  **F-59000 Lille (FR)**

(74) Mandataire: **Boulinguiez, Didier et al**
**Cabinet Plasseraud**
**84, rue d'Amsterdam**
**75440 Paris Cedex 09 (FR)**

(56) Documents cités:
**EP-A- 0 415 799** **US-A- 4 373 956**

Remarques:
Le dossier contient des informations techniques présentées postérieurement au dépôt de la demande et ne figurant pas dans le présent fascicule.

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 579 538 B1

Printed by Rank Xerox (UK) Business Services
2.13.13/3.4

## Description

La présente invention concerne l'utilisation d'un agent pour augmenter la vitesse de durcissement des ciments, des mortiers et des bétons tout en maintenant leur maniabilité.

Elle vise également l'utilisation d'un adjuvant pour ciments, mortiers et bétons, comprenant une quantité efficace dudit agent, ainsi que les ciments, les mortiers et les bétons comprenant une quantité efficace dudit agent ou dudit adjuvant.

Dans le cadre de la présente invention, on entend par vitesse de durcissement le temps s'écoulant entre le début et la fin de prise des ciments.

La méthode de mesure normalisée servant à appréhender cette vitesse de durcissement est basée sur la variation, en fonction du temps, du coefficient de pénétration de l'aiguille d'un prisomètre.

Toujours dans le cadre de la présente invention, on entend par maniabilité des ciments, des mortiers ou des bétons la capacité de maintien d'un état rhéologique dans lequel les ciments, les bétons et les mortiers sont manipulables, c'est-à-dire en particulier coulables ou pompables sans modification sensible de leurs autres propriétés. On recherche au moins le maintien de cette maniabilité depuis la fin de gâchée jusqu'au moment de la mise en place des mortiers et des bétons.

Les ciments Portland, ou leurs analogues, sont connus pour conférer aux mortiers et bétons qui les contiennent des caractéristiques mécaniques élevées après durcissement. Mais ces ciments induisent, de par leur constituant essentiel qui est l'aluminate tricalcique, un début de prise et un temps de prise souvent jugés trop longs dans certaines utlisations.

En effet, pour des applications dans le domaine du bâtiment, on s'efforce non seulement d'allonger le temps de maintien de la maniabilité, mais on s'évertue surtout à répondre aux exigences des cadences de travail sur les chantiers. De ce fait, il est impératif que les bétons et mortiers présentent après environ 16-17 heures suivant leur mise en place, autrement dit à ce qu'il est convenu d'appeler le "jeune âge", des résistances mécaniques suffisantes pour permettre diverses opérations comme par exemple le décoffrage. Par ailleurs, il n'est pas inutile de souligner que les performances exigées au niveau des résistances mécaniques après 16-17 heures sont de plus en plus élevées.

De nombreux produits ont été proposés comme additifs des mortiers et des bétons afin d'améliorer leurs caractéristiques.

Ainsi, divers accélérateurs de prise ont été proposés, ces produits étant choisis notamment parmi les chlorures, les sulfates, les nitrates et autres. Toutefois, il est désormais reconnu que leur utilisation génère d'autres problèmes, dont en particulier des phénomènes de corrosion des armatures métalliques des bétons armés dans lesquels ils sont incorporés.

Afin d'essayer de répondre aux diverses exigences de la technique, c'est-à-dire essentiellement d'obtenir une augmentation de la vitesse de durcissement tout en conservant une bonne maniabilité, on aurait pu envisager l'addition de tels accélérateurs de prise seulement au moment de la mise en place des bétons ou des mortiers, ou quelques minutes seulement avant cette opération. Ceci aurait permis de maintenir une bonne maniabilité des mortiers et des bétons tout en obtenant une accélération de leur vitesse de durcissement et donc une résistance satisfaisante aux jeunes âges. Néanmoins, le recours à ce type de solution entraîne des hétérogénéités dans les bétons et génère de ce fait des différences importantes en ce qui concerne leur résistance mécanique.

On a également envisagé d'associer à ces additifs ayant un effet accélérateur de prise des agents retardateurs de prise tels que les gluconates, l'effet des seconds additifs compensant ou modérant l'effet des premiers. Cependant, le recours à de tels mélanges conduit presque inéluctablement à des problèmes de fausse prise qui occasionnent de graves inconvénients au moment du décoffrage des bétons au jeune âge.

Ces inconvénients présentés par les diverses solutions testées et utilisées selon l'art antérieur ont encore été aggravés par les problèmes de ségrégation ou de ressuage apparaissant lorsque, afin de répondre aux exigences de la technique, il était fait appel à des mortiers ou des bétons fluides, c'est-à-dire des liants hydrauliques présentant des rapports eau sur ciment (E/C) supérieurs à 0,5 et le plus souvent compris entre 0,6 et 0,7.

Par conséquent, aucun agent ou aucun adjuvant n'a permis jusqu'ici d'augmenter la vitesse de durcissement des liants hydrauliques de façon à permettre l'obtention de résistances mécaniques satisfaisantes 16 à 17 heures environ après leur mise en place, sans pour autant nuire à leur maniabilité.

Or la Société Demanderesse a eu le mérite de trouver, à l'issue de nombreuses recherches, un agent, l'utilisation duquel permet de maintenir voire d'améliorer la maniabilité tout en augmentant la vitesse de durcissement des ciments, des mortiers et des bétons.

Cet agent est caractérisé par le fait qu'il répond à la formule

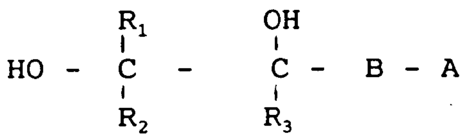

dans laquelle

- $R_1$, $R_2$ et $R_3$, qui peuvent être identiques ou différents, représentent l'atome d'hydrogène ou un groupe alkyle, alkyle substitué, alcène, aryle ou aralkyle,
- B représente une chaîne hydrocarbonée comportant au moins un motif $-CH_2-$ et dont le nombre de carbones situés sur la chaîne est inférieur ou égal à 10,
- A représente les groupements :

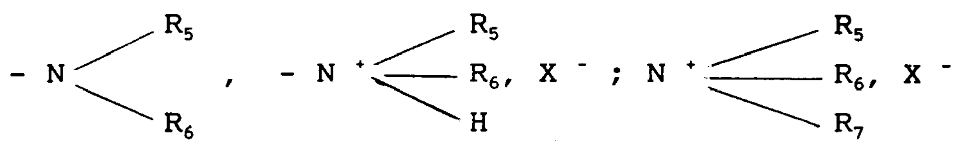

dans lesquels :

- X représente un anion organique ou inorganique choisi dans le groupe comprenant les ions de type halogène, nitrate, nitrite, sulfate, sulfite, thiosulfate, acétate, adipate, citrate, gluconate, p-tosylate, formiate, propionate, phosphate, borate, thiocyanate et sulfonate, étant entendu que les ions de type halogène sont préférés,
- $R_5$, $R_6$ et $R_7$, qui peuvent être identiques ou différents, représentent des radicaux alkyle, alkyle substitué, alcène, aryle ou aralkyle.

La chaîne hydrocarbonée B peut évidemment comporter des substituants dont notamment des groupes hydroxyle et des groupes halogénés.

Selon un mode de réalisation préférentiel l'agent, l'utilisation duquel permet d'améliorer la maniabilité et d'augmenter la vitesse de durcissement des ciments, des mortiers et des bétons répond à la formule

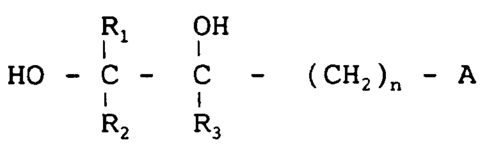

où

- $R_1$, $R_2$, $R_3$ et A ont les mêmes significations que celles données précédemment,
  et où

$$- 1 \leq n \leq 6$$

Selon une autre réalisation préférentielle de l'invention, $R_1$, $R_2$ et $R_3$ représentent des radicaux alkyle en $C_1$ à $C_4$.

Plus préférentiellement encore, l'agent, l'utilisation duquel permet d'améliorer la maniabilité et d'augmenter la vitesse de durcissement des ciments, des mortiers et des bétons répond à la formule suivante :

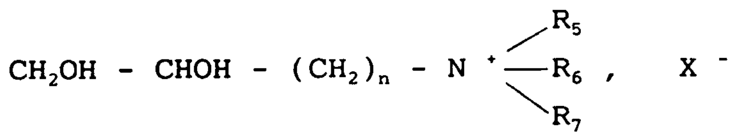

dans laquelle :

- $R_5$, $R_6$ et $R_7$, qui peuvent être identiques ou différents, sont des radicaux alkyle en $C_1$ à $C_4$,
- $1 \leq n \leq 5$

Le brevet US 4,373,956 préconise l'association spécifique et dans des proportions particulières, d'une alcanolamine (en particulier la triéthanolamine) et d'un sel d'acide thiocyanique, en vue d'accélérer le durcissement de liants hydrauliques.

Par ailleurs, la demande de brevet EP 415 799 concerne l'utilisation de certaines trialcanolamines (qualifiées comme étant "higher trialkanolamines") spécifiquement en vue d'augmenter les résistances mécaniques de compositions de ciments particulières, à sept et vingt-huit jours.

Indépendamment du fait qu'ils accélèrent la vitesse de durcissement des liants hydrauliques dans lesquels ils sont introduits, les agents dont l'utilisation est l'objet de la présente invention permettent d'augmenter, de façon surprenante et inattendue, et de manière tout à fait significative, les résistances mécaniques desdits liants hydrauliques, et ceci non seulement au jeune âge mais également après sept et vingt-huit jours. En outre ils permettent de maintenir, voire d'augmenter, le temps de maniabilité de ces liants hydrauliques sans nuire pour autant aux autres caractéristiques.

Ces avantages très importants apportés par les agents utilisés conformément à l'invention sont d'autant plus marqués que les liants hydrauliques présentent un rapport E/C supérieur à 0.5 et de préférence supérieur à 0.6. En effet, les agents conformes à l'invention permettent de résoudre les problèmes de ségrégation et de ressuage rencontrés précédemment lors de l'utilisation des mortiers ou des bétons fluides.

Ces avantages apportés au niveau de la maniabilité, en particulier sur les liants hydrauliques présentant un rapport E/C supérieur à 0.5, sont d'autant plus appréciés que le lieu de mise en place des bétons et des mortiers est éloigné du lieu de leur fabrication, ceci occasionnant de longs trajets, voire des attentes prolongées.

D'autre part, on peut souligner que tous les avantages conférés par les agents utilisés conformément à l'invention sont obtenus non seulement dans des conditions climatiques normales mais également à de basses ou de hautes températures.

L'invention vise également l'utilisation d'un adjuvant pour ciments, mortiers et bétons, caractérisée par le fait que ledit adjuvant comprend une quantité efficace d'au moins un agent tel que défini précédemment. Cet adjuvant peut se présenter sous forme sèche ou liquide et peut comporter, à côté de l'agent conforme à l'invention, divers additifs conventionnels pour mortiers et bétons, comme par exemple des agents réducteurs d'eau, des agents accélérateurs ou retardateurs de prise, des agents anticorrosion, des agents aérateurs, des fluidifiants, des plastifiants, des dérivés chlorés, des oléfines époxydées éventuellement aminées, ou des agents de rhéologie du type dérivés cellulosiques ou dérivés acryliques. Le plus généralement, l'adjuvant en question comprend de 10 à 95 % en poids sec/sec, et de préférence de 30 à 80 % en poids, d'au moins un agent améliorant le temps de maniabilité et augmentant la vitesse de durcissement des ciments, mortiers et bétons conformes à l'invention.

L'invention vise également l'utilisation dans des compositions de ciments, de mortiers ou de bétons d'une quantité efficace d'au moins un agent ou d'au moins un adjuvant tels que définis précédement. Par "quantité efficace", on entend une quantité d'agent selon l'invention (celui-ci pouvant être apporté seul ou au sein d'un adjuvant selon l'invention) apte à conférer au liant hydraulique dans lequel il est apporté une vitesse de durcissement supérieure à la vitesse de durcissement que présenterait un liant hydraulique de même composition mais qui serait exempt de tout agent selon l'invention.

Ces compositions de ciments, de mortiers ou de bétons comprennent, le plus généralement, une quantité de 0,001 à 2 %, de préférence de 0,01 à 1,5 %, et plus préférentiellement encore de 0,015 à 1 % en poids par rapport au poids de ciment d'un agent conforme à l'invention, les quantités étant exprimées en sec/sec.

Les agents ou adjuvants utilisés conformément à l'invention peuvent être introduits dans les mortiers ou dans les bétons secs prêts à l'emploi ou bien au moment de leur préparation avec l'eau de gâchage. L'invention vise donc notamment une eau de gâchage destinée à la préparation de mortiers ou bétons comprenant une quantité efficace d'un agent selon l'invention ou d'un adjuvant selon l'invention.

Ils peuvent également être ajoutés directement aux ciments lors de la fabrication même de ces derniers. Ils font alors partie intégrante desdits ciments.

Les agents ou adjuvants utilisés conformément à l'invention peuvent également être introduits en partie au moment

de la préparation de liants hydrauliques et en partie juste avant la mise en place de ces liants hydrauliques. Ils peuvent également, bien que cela ne soit généralement pas préféré, être introduits en totalité juste avant la mise en place de liants hydrauliques.

Les agents utilisés conformément à l'invention peuvent être préparés de manière connue en soi. Ils peuvent ainsi, notamment, être préparés par réaction, dans une première étape, d'un composé comportant à l'une de ses extrémités une fonction époxy et à l'autre extrémité un groupement réactif tel que par exemple un atome d'halogène, avec l'ammoniaque, une amine ou avec un produit comportant une fonction amine, et par réaction, dans une seconde étape, du produit ainsi obtenu avec un agent alcalin, cette deuxième étape conduisant à l'hydrolyse de la fonction époxy.

Ainsi, les agents utilisés conformément à l'invention peuvent être préparés par réaction d'une épihalogénohydrine, telle que l'épichlorhydrine, avec de l'ammoniaque, des amines primaires, secondaires et tertiaires puis réaction des produits ainsi obtenus avec un agent alcalin tel que la soude de façon à hydrolyser la fonction époxy.

L'invention pourra être mieux comprise à l'aide des exemples qui suivent et qui sont donnés soit à titre comparatif, soit relativement à des modes de réalisation avantageux.

## EXEMPLE 1

Préparation d'une gâchée témoin et d'une gâchée adjuvantée, pour un rapport E/C = 0.5.

Dans le bol d'un malaxeur RILEM (commercialisé par la Société PERRIER et conforme à la norme ASTM C 305), on mélange 450 g de ciment référencé CPA 55 HTS, 225 g d'eau potable et 1350 g de sable normalisé (NF 15403), à une vitesse de 140 tours/mn pendant 30 secondes. Puis, durant 30 secondes, on ramène, à l'aide de la pale du malaxeur, la gâchée collée à la paroi du bol au centre de ce dernier, puis on malaxe à une vitesse de 280 tours/mn pendant 2 minutes. On râcle à nouveau la paroi du bol puis on malaxe à nouveau pendant 2 minutes à une vitesse de 280 tours/mn.

Lors de l'adjuvantation du mortier à l'aide des produits conformes à l'invention, une bonne homogénéité est assurée grâce à la dilution préalable des agents ou des adjuvants conformes à l'invention avec de l'eau de gâchage.

Préparation d'un agent A conforme à l'invention

L'agent testé, dénommé ci-après A, est constitué par le chlorure de diol 2,3-propyl-triméthylammonium, qui est obtenu de la manière suivante : dans un bécher de 6 litres, on prépare une dilution à 5 % en poids dans l'eau distillée de chlorure de glycidyl triméthylammonium (commercialisé par exemple par la Société DEGUSSA sous la dénomination QUAB 188 ou par la Société hollandaise C.F.Z. sous la dénomination REAGENS-S-CFZ), puis on ajoute à cette dilution de la soude à raison de 1 % en poids de NAOH par rapport au chlorure de glycidyl triméthylammonium.

L'ensemble est ensuite chauffé à 110°C pendant 6 heures, puis est neutralisé à un pH de 5-6 par addition d'acide chlorhydrique.

Le milieu réactionnel est ensuite évaporé sur un appareil du type ROTOVAPOR jusqu'à une matière sèche d'environ 88 % afin de cristalliser la majeure partie du NaCl formé, que l'on sépare par filtration sur verre fritté.

Mesures de l'étalement

Ces mesures sont effectuées sur une table à chocs constituée d'un plateau circulaire en acier inoxydable et d'un système marteau-enclume, contrôlé par un compteur, permettant un choc à la seconde. Chaque choc correspond à une chute de 15 mm de hauteur. Dès la fin de la gâchée préparée de la façon décrite ci-dessus, on remplit un moule tronconique en acier inoxydable de 100 mm de diamètre à la base, de 70 mm de diamètre au sommet et de 60 mm de hauteur. Le moule ainsi rempli est alors placé au milieu du plateau circulaire de la table à chocs. Puis on enlève le moule et la table à chocs est mise en marche. Après 15 secondes, on arrête la table à chocs et on calcule la moyenne de 6 mesures du diamètre d'étalement du mortier affaissé.

Ces mesures sont réalisées à 20°C et pour une humidité relative de 65 %.

Après chaque mesure, le mortier étalé sur le plateau de la table à chocs est replacé dans le bol du malaxeur, est laissé au repos pendant 15 minutes, puis est malaxé à une vitesse de 280 tours/mn pendant 30 secondes. Un test d'étalement est alors à nouveau effectué. Cette même opération est renouvelée jusqu'à ce que le mortier étalé présente un aspect de terre humide, forme des agrégats qui se désolidarisent et ne permettent plus de mesure correcte du diamètre.

Des mesures d'étalement réalisées selon la méthode décrite ci-dessus ont été effectuées sur un mortier témoin et sur des mortiers additionnés de diverses quantités de produit A conforme à l'invention. Les pourcentages d'agent additionné sont exprimés en poids sec par rapport au poids de ciment.

Les résultats obtenus sont rassemblés dans le tableau I.

TABLEAU I

| | TEMOIN | % PRODUIT A | | | | |
|---|---|---|---|---|---|---|
| | | 0,03 | 0,09 | 0,15 | 0,21 | 0,27 |
| TO | 222 | 232,5 | 244 | 242 | 248 | 256 |
| 15 mn | 210 | 216 | 229 | 227,5 | 231 | 237,5 |
| 30 mn | 200 | 204 | 213 | 215,5 | 221 | 226 |
| 45 mn | 190 | 194 | 206,5 | 207 | 214 | 220 |
| 1 H | 179 | 187 | 198 | 199 | 207 | 210 |
| 1 H 15 mn | 176 | 178 | 187 | 189,5 | 201 | 205 |
| 1 H 30 mn | 160 | 171 | 178 | 181 | 194 | 199 |
| 1 H 45 mn | | 160 | 168 | 175 | 187 | 191 |
| 2 H | | | 160 | 164 | 179 | 185 |
| 2 H 15 mn | | | | 160 | 169 | 175 |
| 2 H 30 mn | | | | | 165 | 169 |
| 2 H 45 mn | | | | | 160 | 164 |
| 3 H | | | | | | 160 |

A la lecture de ces résultats, on constate que l'utilisation d'agents selon l'invention permet d'augmenter le temps pendant lequel le mortier reste fluide et manipulable, et ceci dès les faibles doses d'addition.

Un mortier comportant un agent conforme à l'invention présente un temps de maniabilité beaucoup plus long qu'un mortier non additionné d'un tel agent.

L'utilisation des agents conformes à l'invention autorise donc un temps de transport des mortiers beaucoup plus important entre le lieu de leur fabrication et celui de leur utilisation. Elle permet également de travailler les mortiers plus longtemps sans observer de ségrégation et elle permet enfin de conserver un mélange parfaitement homogène.

Mesure des temps de prise

Pour réaliser ce test, on remplit des moules tronconiques, de hauteur 40 mm, de diamètre inférieur de 80 mm et de diamètre supérieur de 70 mm, huilés, avec la gâchée telle que préparée précédemment.

Ces moules sont placés à la base d'un prisomètre automatique commercialisé par le CERILH sous la dénomination EUROMATEST.

A intervalles réguliers, c'est-à-dire toutes les 15 minutes, une aiguille lestée d'un poids d'un kilo pénètre dans le mortier jusqu'à rencontrer la résistance offerte par le fond du moule ou le début de prise du mortier. La hauteur d'enfoncement est directement transcrite sur un graphe.

Les débuts de prise, fins de prise et temps de durcissement sont mesurés à la fois sur un mortier témoin et sur des compositions de mortiers conformes à l'invention, c'est-à-dire comportant des agents ou des adjuvants selon l'invention.

Les valeurs obtenues sont rassemblées dans le tableau II.

TABLEAU II

| | % | DEBUT DE PRISE | FIN DE PRISE | TEMPS DE DURCISSEMENT |
|---|---|---|---|---|
| Témoin | - | 4 H 0 5 mn | 6 H 20 mn | 2 H 15 mn |
| Produit A | 0,03 | 4 H 00 mn | 5 H 45 mn | 1 H 45 mn |
| | 0,09 | 4 H 00 mn | 5 H 40 mn | 1 H 40 mn |
| | 0,15 | 4 H 05 mn | 5 H 50 mn | 1 H 45 mn |
| | 0,21 | 4 H 20 mn | 5 H 20 mn | 1 H 00 |
| | 0,27 | 4 H 35 mn | 6 H 05 mn | 1 H 25 mn |

On peut constater que même pour les plus faibles quantités de produit A, il existe une augmentation de la vitesse de durcissement des mortiers.

Mais de plus on peut observer, à la lecture des résultats consignés dans le tableau II, que les produits selon l'invention ne sont pas retardateurs de prise.

Résistances mécaniques

Pour mesurer les résistances mécaniques, on prépare des éprouvettes dans des moules de serrage démontables en acier inoxydable comportant trois compartiments horizontaux permettant la préparation simultanée de trois éprouvettes prismatiques de section transversale de 40 mm x 40 mm et de 160 mm de longueur (norme EN 196.1).

La gâchée décrite précédemment est incorporée dans les moules de la façon suivante : les moules préalablement huilés sont remplis à moitié puis fixés au centre de la table à chocs déjà décrite. On effectue 60 secousses, puis on remplit le moule totalement et on effectue à nouveau 60 secousses sur la table à chocs. La surface des moules est arasée pour éliminer l'excédent de préparation. Les éprouvettes sont démoulées après 17 heures pour mesurer les résistances aux jeunes âges. Pour les résistances à 7 jours et à 28 jours, on démoule les éprouvettes 24 heures après leur préparation puis on les stocke à une température de 20°C dans des bacs saturés en humidité, dans lesquels elles reposent sur une grille métallique perforée.

Pour effectuer les mesures des résistances mécaniques, on casse d'abord les éprouvettes sur un appareil de mesure de la rupture à la flexion (commercialisé par PERRIER) conforme aux normes P15451-P15401. Ce dispositif comporte deux appuis à rouleaux de 10 mm de diamètre, distants de 100 mm, sur lesquels repose l'éprouvette sur une face latérale de moulage. Un troisième rouleau de même diamètre, équidistant des deux premiers, transmet une charge. La rupture est provoquée par le moment issu du déplacement de cette charge.

Les deux morceaux d'éprouvette obtenus sur l'appareil de flexion sont ensuite testés sur un compressomètre PERRIER. La demi-éprouvette repose sur une face latérale de moulage et est comprimée sur une section de 40 x 40 mm par deux plaques de métal de 40 mm de largeur et de longueur supérieure à 40 mm. La plaque supérieure de métal peut s'incliner pour obtenir un contact parfait avec l'éprouvette. On mesure ainsi la contrainte (en bars) nécessaire à la rupture, par compression, de l'éprouvette.

On a ainsi effectué les mesures de résistance à la compression des éprouvettes additionnées des produits selon l'invention. Ces éprouvettes ont été stockées à 20°C pendant 17 heures, 7 jours, et 28 jours. Les résultats obtenus sont rassemblés dans le tableau III.

TABLEAU III

| | TEMOIN | % PRODUIT A | | | | |
|---|---|---|---|---|---|---|
| | | 0,03 | 0,09 | 0,15 | 0,21 | 0,27 |
| Résistances à 17 H | 60 | 98,5 | 112 | 113 | 132 | 127 |
| Résistances à 7 j | 324 | 389 | 401 | 417 | 455 | 399 |
| Résistances à 28 j | 469 | 483 | 525 | 522 | 519 | 504 |

L'adjuvantation du mortier par le produit A conforme à l'invention permet donc, par une augmentation significative de la vitesse de durcissement, d'augmenter les résistances au jeune âge de façon très significative en comparaison du témoin non adjuvanté, ce qui a pour principale conséquence de permettre un décoffrage de l'ouvrage beaucoup plus tôt. Cela est d'autant plus avantageux que les résistances obtenues à 7 jours et 28 jours avec le mortier additionné des produits selon l'invention sont également nettement supérieures à celles du témoin. L'utilisation des agents conformes à l'invention permet donc une plus grande efficacité, par une augmentation significative de la vitesse de durcissement, laquelle se traduit par un décoffrage plus rapide, et permet d'obtenir un ouvrage fini beaucoup plus résistant.

Les éprouvettes réalisées avec les mortiers conformes à l'invention ont également été stockées à 5°C dans les mêmes conditions que celles décrites précédemment. De même, les résistances à 17 heures ont alors été mesurées. Les valeurs obtenues sont rassemblées dans le tableau IV ci-dessous.

TABLEAU IV

| | TEMOIN | % PRODUIT A | |
|---|---|---|---|
| | | 0,03 | 0,07 |
| Résistance à 17 H | 8 | 13,5 | 20 |

On constate donc que grâce à l'agent selon l'invention, on peut augmenter de façon significative les résistances à 17 heures, ce qui permet à l'ouvrage élaboré d'être décoffré plus tôt, et ceci à une température ambiante relativement basse qui représente une condition de travail réputée difficile.

**EXEMPLE 2**

Résultats obtenus avec un mortier fluide

I - Procédures expérimentales retenues

Les essais ont été réalisés sur une formulation de mortier spécifique se rapprochant de celle d'un béton au niveau du rapport surface de mouillage du ciment/surface de mouillage des granulats et au niveau du rapport eau/ciment. Des expériences complémentaires de validation ont également eu lieu sur du mortier normalisé.

a) Composition du mortier

- ciment CPA HP ORIGNY : 350 g
- sable normalisé : 1350 g
- eau qs pour un rapport E/C de 0,6 et E/C de 0,7.

Les mesures de maniabilité sont réalisées sur un mortier dont la formulation est la plus proche possible de celle d'un béton fluide.

b) Procédure de malaxage

- ciment seul : malaxage à petite vitesse pendant 30 secondes
- ajout du sable : malaxage à petite vitesse pendant 30 secondes
- ajout de l'eau et des agents ou des adjuvants : malaxage à grande vitesse pendant 2 minutes
- durée totale : 3 minutes.

c) Mesure de maniabilité

Toutes les quinze minutes, on mesure l'étalement d'un tronc de cône de mortier

- avant (sur certains essais)
- et après

avoir subi quinze secousses à la table à chocs.

Entre chaque mesure, le mortier est malaxé à vitesse lente dans la cuve du malaxeur RILEM.

Le test s'arrête lorsque le mortier prend la consistance d'une terre humide, c'est-à-dire lorsqu'il n'est plus possible, après quinze secousses, de mesurer un diamètre, la "galette" ayant éclaté.

d) Mesure des résistances

Lorsqu'il y a éclatement du mortier, des éprouvettes 40 mm x 40 mm x 160 mm sont coulées. Leurs résistances en traction par flexion et en compression sont mesurées à 16 heures, ou à 24 heures, ou 28 jours après les essais. On utilise pour cela une presse ADAMEL DY 25.

Pour les résistances à 28 jours, les éprouvettes sont immergées jusqu'à 2 heures avant l'essai.

II - Résultats des essais réalisés avec le produit A conforme à l'invention

Dans tous les essais réalisés, le dosage retenu est de 0,08 % du poids de ciment (CPA HP ORIGNY).

1) Essais de maniabilité . Influence du dosage en eau

Deux dosages ont été retenus, équivalant à des rapports E/C de 0,6 et de 0,7. Les résultats obtenus sont présentés sur les figures 1 et 2 qui représentent l'étalement en centimètres en fonction du temps en minutes à la fois pour le mortier témoin et pour le mortier additionné de 0,08 % du produit A conforme à l'invention.

Ces résultats montrent que pour un rapport E/C = 0,6, l'utilisation de 0,08 % du produit A permet d'augmenter le temps de maniabilité de 30 minutes par rapport au mortier témoin.

Cette augmentation est de 60 minutes pour le rapport E/C = 0,7.

2) Résistances en compression

2.1 Résistances à 16 heures

Avec le mortier spécifique, des éprouvettes ont été coulées à :

- t = 0, c'est-à-dire immédiatement après malaxage, et à
- t éclatement, c'est-à-dire après éclatement du mortier.

Les résultats obtenus sont présentés dans le tableau VI.

TABLEAU VI

| Résistances en compression à 16 heures (MPa) Mortier spécifique E/C = 0.60 | | | | |
|---|---|---|---|---|
| Type de mortier | Mortier témoin | | Mortier + 0,08% d'agent A | |
| Température de conservation | Coulage à t = 0 | Coulage à t = 30 mn (éclatement) | t = 0 | t = 60 mn (éclatement) |
| 10°C | 2 | 3,2 | 3,7 | 6,3 |
| 20°C | 6,2 | 8,5 | 11,9 | 16,2 |

2.2 Résistances à 28 jours

Les résultats obtenus sont rassemblés dans le tableau VII

TABLEAU VII

| Type de mortier Caractéristiques | Mortier spécifique | | | Mortier normalisé E/C = 0,5 |
|---|---|---|---|---|
| | E/C = 0,5 | E/C = 0,6 | E/C = 0,7 | |
| Sans adjuvant | 46 | 43,2 | 39,8 | 52,7 |
| avec 0,08% Agent A | 49,2 | 46,1 | 41,1 | 54 |

On peut donc constater que l'addition de 0,08 % de produit A conforme à l'invention maintient les résistances à 28 jours.

2.3 Conclusion

En conclusion, l'addition de 0,08 % de produit A augmente considérablement les résistances à 16 heures et maintient celles à 28 jours.

3) Influence de la température de conservation sur la résistance à 16 heures (MPa)

Les résultats des essais sont rassemblés dans le tableau VIII.

TABLEAU VIII

| Température de conservation | Adjuvantation | Mortier spécifique | | | Mortier normalisé E/C = 0,5 |
|---|---|---|---|---|---|
| | | E/C = 0,5 | E/C = 0,6 | E/C = 0,7 | |
| 5°C | sans agent | 0,9 | 0,6 | 0,4 | 0,7 |
| | avec 0,08 % d'agent A | 0,8 | 0,5 | 0,4 | 0,85 |
| 10°C | sans agent | 3,6 | 2,1 | 1,3 | 3,1 |
| | avec 0,08 % d'agent A | 5 | 3,6 | 2,4 | 4,1 |
| 15°C | sans agent | 3,7 | 2,5 | 1,5 | 3,3 |
| | avec 0,08 % d'agent A | 6,2 | 3,9 | 2,6 | 4,4 |
| 20°C | sans agent | 9,4 | 6,3 | 4,6 | 8,7 |
| | avec 0,08 % d'agent A | 15,8 | 12,7 | 8,4 | 14,7 |

Pour des températures supérieures ou égales à 10°C, l'utilisation du produit A à raison de 0,08 % du poids de ciment permet d'augmenter les résistances en compression de manière très significative, quelle que soit la formulation du mortier.

On peut constater en effet que les résistances sont ainsi augmentées de 57 % à 10°C, de 58 % à 15°C et de 80 % à 20°C.

4) Essais d'étuvage des mortiers

Afin de représenter ce qui peut se passer en préfabrication, des essais ont été conduits sur le mortier spécifique dans les conditions ci-après :

- température d'étuvage : 40°C
- temps d'étuvage : 4, 6, 8 heures
- rapport E/C : 0,45 et 0,50.

Les valeurs des résistances en compression obtenues figurent dans le tableau IX.

TABLEAU IX

| Résistances en compression obtenues après étuvage à 40°C | | | | |
|---|---|---|---|---|
| Type de mortier | E/C | Temps d'étuvage (heures) | | |
| | | 4 | 6 | 8 |
| sans adjuvant | 0,45 | 3 | 11,8 | 14,4 |
| | 0,50 | 1,8 | 10,6 | 12,8 |
| 0,08% d'agent A | 0,45 | 4,8 | 14 | 18,3 |
| | 0,50 | 3,4 | 13,5 | 14,6 |

L'addition de produit A conforme à l'invention s'avère bénéfique vis-à-vis des résistances en compression. On note en effet une augmentation de ces résistances de :

- 74 % pour un temps d'étuvage de 4 H
- 23 % pour un temps d'étuvage de 6 H
- 21 % pour un temps d'étuvage de 8 H.

EXEMPLE 3

I - Etude de la maniabilité d'un mortier spécifique à 20°C

On étudie l'influence du produit A conforme à l'invention sur la maniabilité à 20°C d'un mortier spécifique de composition suivante :

| | |
|---|---|
| - ciment CPA HP ORIGNY | 350 g |
| - sable normalisé | 1 350 g |
| - eau quantité suffisante pour un rapport E/C de 0,6 | 210 g |

Le produit A est dosé respectivement à 0,02 et 0,08 % du poids de ciment.

La maniabilité est évaluée par la mesure de l'étalement d'un cône de mortier après 15 coups à la table à chocs. Les résultats obtenus sont présentés sur la figure 3 qui représente l'étalement en centimètres en fonction du temps en minutes à la fois pour le mortier témoin, pour le mortier additionné de 0,02 % du produit A et pour le mortier additionné de 0,08 % du produit A.

Ces résultats confirment que l'utilisation d'un agent conforme à l'invention permet d'augmenter significativement le temps de maniabilité d'un mortier.

II - Etude des performances mécaniques sur mortier spécifique ou béton à différentes températures

a) influence de la température de maturation sur les résistances à 16 heures (tests sur mortier spécifique)

Deux températures ont été fixées : 10°C et 20°C.

L'analyse des résultats (tableaux X et XI) fait ressortir les points suivants :

1) pour T = 10°C, on observe pour les mortiers dosés à 0,02 et 0,08 % en produit A une augmentation de résistance respectivement de 5 % et de 70 % par rapport au mortier de référence.

2) pour T = 20°C, on observe pour les mortiers dosés à 0,02 et 0,08 % en produit A une augmentation de résistance respectivement de 34 % et de 54 % environ par rapport au mortier de référence.

TABLEAU X

| Influence de la température de conservation (T = 10°C) sur les résistances à 16 heures (tests sur prismes de 4 x 4 x 16 $cm^3$) | | | |
|---|---|---|---|
| Adjuvant | Aucun (référence) | Produit A | |
| Dosage | --- | 0,02 % | 0,08 % |
| Rc 16h (MPa) | 2,0 | 2,1 | 3,4 |

TABLEAU XI

| Influence de la température de conservation (T = 20°C) sur les résistances à 16 heures (tests sur prismes de 4 x 4 x 16 $cm^3$) | | | |
|---|---|---|---|
| Adjuvant | Aucun (référence) | Produit A | |
| Dosage | --- | 0,02 % | 0,08 % |
| Rc 16h (MPa) | 12,7 | 17,0 | 19,6 |

b) Influence d'une température de maturation de 5°C sur la résistance à 16 heures d'un béton

Les essais ont été effectués à 5°C sur un béton dont la formule est la suivante :

| | |
|---|---|
| - ciment CPA HP | 260 kg |
| - sable 0/5 roulé | 800 kg |
| - gravillons 5/15 | 1 100 kg |
| - eau | déterminée pour obtenir un slump initial de 15 cm. |

Les résistances (Rc 16h) ont été mesurées sur des cylindres d'un diamètre de 11 cm et d'une hauteur de 22 cm. Les résultats sont regroupés dans le tableau XII ci-dessous.

TABLEAU XII

| Influence de l'adjuvantation sur les résistances à 16 heures du béton | | |
|---|---|---|
| Adjuvant | E/C | Rc 16h (MPa) |
| Aucun (référence) | 0,60 | 0,6 |
| 0,02 % produit A | 0,59 | 0,9 |
| 0,08 % produit A | 0,58 | 1,0 |

Il résulte globalement des résultats des tableaux X à XII qu'un agent conforme à l'invention tel que le produit A a

un effet "accélérateur de durcissement" de liants hydrauliques tels que mortiers et bétons.

Cet effet semble particulièrement significatif à partir d'une température de maturation de 10°C.

c) Etude de la résistance à 28 jours d'un mortier spécifique conservé à 20°C

Des mesures de résistance à 28 jours (Rc 28 j) ont été effectuées sur mortier spécifique. Après démoulage à 24 heures d'hydratation, les éprouvettes (prismes de 4 x 4 x 16 $cm^3$) ont été conservées sous eau à T = 20°C jusqu'au 28ème jour. Les résultats sont regroupés dans le tableau XIII ci-dessous.

TABLEAU XIII

| Influence de l'adjuvantation sur les résistances à 28 jours du mortier | | | |
|---|---|---|---|
| Adjuvant | Aucun (référence) | Produit A | |
| Dosage | --- | 0,02 % | 0,08 % |
| Rc 28j (MPa) | 53,9 | 55,6 | 60,0 |

Il résulte du tableau XIII que par rapport au mortier de référence, les mortiers adjuvantés en agent conforme à l'invention présentent une augmentation de résistance à 28 jours et ce, y compris pour de très faibles taux d'adjuvantation (0,02 %/ciment).

III - Etude des variations dimensionnelles d'un béton de dallage

Les variations dimensionnelles ont été mesurées dans les 24 premières heures sur un barreau de 7 x 7 x 50 $cm^3$, ce qui permet d'évaluer le retrait plastique à partir du début de prise.

La formulation de béton retenue est celle d'un béton de dallage comprenant :

| | |
|---|---|
| - ciment CPJ 45 VICAT | 330 $kg/m^3$ |
| - sable 05/roulé | 850 $kg/m^3$ |
| - gravillons 5/15 roulés | 1 000 $kg/m^3$ |
| - eau | réglée pour obtenir un slump de 15 cm. |

Les essais sont réalisés à température T de 20°C et à humidité relative HR de 50 %.

Les résultats obtenus sont repris au niveau du tableau XIV ci-dessous.

TABLEAU XIV

| Evaluation du retrait entre le début de prise et 24 heures | | | | |
|---|---|---|---|---|
| Adjuvant | E/C | Retrait maximal observé dans les premières heures (µm/m) | Temps au bout duquel le retrait maximal est atteint (h) | Diminution du retrait par rapport à la référence (%) |
| Aucun (référence) | 0,57 | 140 µm/m | 23 h | -- |
| 0,02 % de produit A | 0,57 | 112 µm/m | 23 h | - 20 % |
| 0,08 % de produit A | 0,56 | 90 µm/m | 23 h | - 36 % |

Il résulte du tableau XIV que l'agent conforme à l'invention permet également, et ce même à des taux d'incorporation très faibles, de réduire de manière très significative le phénomène néfaste de retrait observé entre le début de prise et 24 heures, pour un liant hydraulique de type béton de dallage.

IV - Etude du ressuage sur mortier spécifique

Le présent essai consiste à mesurer la quantité d'eau qui remonte à la surface d'un mortier spécifique conservé pendant une heure après sa fabrication dans une étuve ventilée à température T de 50°C. La surface libre est de 390 $cm^2$.

Le taux de ressuage est le rapport entre la quantité d'eau récupérée et la quantité d'eau de gachâge.

Les résultats obtenus, qui sont la moyenne de trois mesures, sont repris au niveau du tableau XV ci-après.

TABLEAU XV

| Influence de l'adjuvant et de son taux d'incorporation sur le taux de ressuage | | |
|---|---|---|
| Adjuvant | Taux de ressuage (%) | Diminution du taux de ressuage par rapport à la référence (%) |
| Aucun (référence) | 5,6 | -- |
| 0,02 % de produit A | 4,5 | - 19,6 % |
| 0,04 % de produit A | 3,0 | - 46,4 % |
| 0,08 % de produit A | 1,6 | - 71,4 % |

Il résulte du tableau XV que l'agent conforme à l'invention permet également de réduire les problèmes de ressuage. Cet effet "anti-ressuage" est d'autant plus significatif que le taux d'incorporation en produit A augmente.

V - Etude de la perméabilité sur béton de dallage

Le principe du présent essai consiste à mesurer l'absorption d'eau par capillarité d'un bloc de béton de dimensions 15 x 15 x 5 $cm^3$. (Cf figure 4)

La formule de béton testée est celle donnée précédemment pour le béton de dallage (cf exemple 3 III).

Conformément à la figure 5, on observe que, par rapport au béton de référence, le volume d'eau absorbé par les bétons adjuvantés en produit A est diminué de 50 % environ et ce, quel que soit le taux d'incorporation du produit A (0,02 % ou 0,08 %/ciment).

VI - Conclusion

Il résulte globalement de l'ensemble des essais décrits au niveau du présent exemple 3 que les agents conformes à l'invention, à savoir des agents augmentant la vitesse de durcissement de liants hydrauliques tout en maintenant, voire augmentant leur maniabilité, présentent, entre autres, les avantages supplémentaires suivants :

- ce sont des agents anti-ségrégation et anti-ressuage efficaces,
- ils contribuent à diminuer le retrait plastique de bétons,
- ils diminuent la perméabilité de bétons.

EXEMPLE 4

Le présent essai a pour objet d'exemplifier la possibilité d'ajouter l'agent conforme à l'invention directement à un ciment.

Du produit A conforme à l'invention est pulvérisé, sous agitation sur du ciment de type "CPA 55 ET GORAIN" (ciment sans aucune adjuvantation) préalablement chauffé à 80°C, de telle sorte que le ciment contienne 0,0013 % de produit A (sec/sec). On maintient l'agitation pendant 5 minutes. On laisse refroidir un échantillon du ciment ainsi préparé dans un paquet plastique soudé, et ce pendant 24 heures.

On évalue ensuite le ciment selon la norme française NF 96-1, et ce en comparaison à un ciment "CPA 55 ET GORAIN" non adjuvanté en produit A.

Les valeurs de début, fin de prise et temps de durcissement obtenues sont rassemblées dans le tableau XVI.

TABLEAU XVI

| Adjuvant | Début de prise | Fin de prise | Temps de durcissement |
|---|---|---|---|
| Aucun (référence) | 4 h 15 | 6 h 15 | 2 h 00 |
| 0,0013 % produit A | 4 h 30 | 5 h 45 | 1 h 15 |

On peut constater que l'agent conforme à l'invention peut, et ce même à de très faibles doses, valablement être incorporé directement à un ciment. Le liant hydraulique obtenu à partir dudit ciment (mortier de E/C = 0,5) présente une vitesse de durcissement augmentée par rapport à un liant hydraulique préparé à partir d'un ciment non adjuvanté.

## Revendications

**1.** Utilisation d'un agent répondant à la formule :

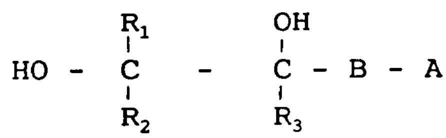

dans laquelle

- $R_1$, $R_2$ et $R_3$, qui peuvent être identiques ou différents, représentent l'atome d'hydrogène ou un groupe alkyle, alkyle substitué, alcène, aryle ou aralkyle,
- B représente une chaîne hydrocarbonée comportant au moins un motif $-CH_2-$ et dont le nombre de carbones situés sur la chaîne est inférieur ou égal à 10,
- A représente les groupements :

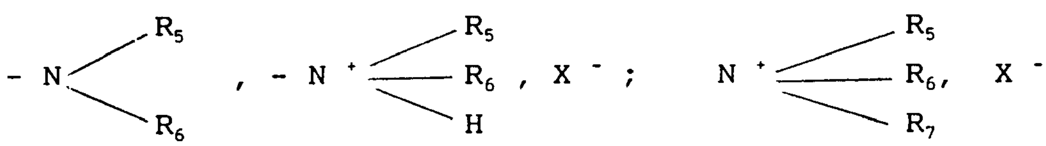

dans lesquels :

- X représente un anion organique ou inorganique choisi dans le groupe comprenant les ions de type halogène, nitrate, nitrite, sulfate, sulfite, thiosulfate, acétate, adipate, citrate, gluconate, p-tosylate, formiate, propionate, phosphate, borate, thiocyanate et sulfonate, les ions de type halogène étant préférés.
- $R_5$, $R_6$ et $R_7$, qui peuvent être identiques ou différents, représentent des radicaux alkyle, alkyle substitué, alcène, aryle ou aralkyle, pour augmenter la vitesse de durcissement des ciments, des mortiers et des bétons tout en maintenant ou en améliorant le temps de leur maniabilité.

**2.** Utilisation selon la revendication 1, caractérisée par le fait que l'agent répond à la formule :

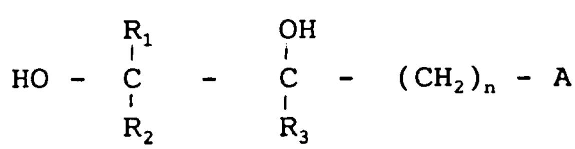

- $R_1$, $R_2$, $R_3$ et A ont les mêmes significations que celles données précédemment et où

$$-1 \leq n \leq 6.$$

**3.** Utilisation selon l'une ou l'autre des revendications 1 et 2, caractérisée par le fait que $R_1$, $R_2$ et $R_3$ représentent des radicaux alkyle en $C_1$ à $C_4$.

**4.** Utilisation selon l'une quelconque des revendications 1 à 3, caractérisée par le fait que l'agent répond à la formule :

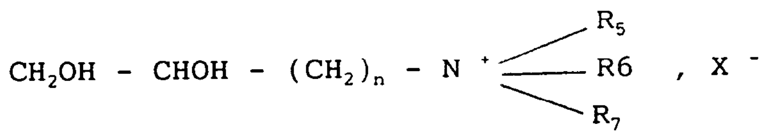

dans laquelle :

- $R_5$, $R_6$ et $R_7$, qui peuvent être identiques ou différents, sont des radicaux alyle en $C_1$ à $C_4$,

$$-1 \leq n \leq 5$$

**5.** Utilisation d'un adjuvant pour ciments, mortiers et bétons pour augmenter leur vitesse de durcissement tout en maintenant ou en améliorant leur maniabilité, caractérisée par le fait que ledit adjuvant comprend une quantité efficace d'au moins un agent répondant à la formule :

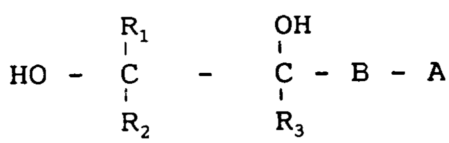

dans laquelle

- $R_1$, $R_2$ et $R_3$, qui peuvent être identiques ou différents, représentent l'atome d'hydrogène ou un groupe alkyle, alkyle substitué, alcène, aryle ou aralkyle,
- B représente une chaîne hydrocarbonée comportant au moins un motif $-CH_2-$ et dont le nombre de carbones situés sur la chaîne est inférieur ou égal à 10,
- A représente les groupements :

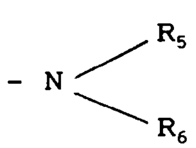 , 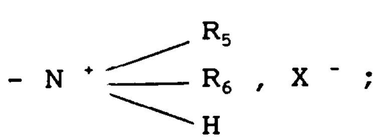 ; 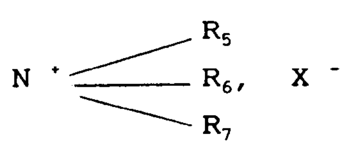

dans lesquels :

- X représente un anion organique ou inorganique choisi dans le groupe comprenant les ions de type halogène, nitrate, nitrite, sulfate, sulfite, thiosulfate, acétate, adipate, citrate, gluconate, p-tosylate, formiate, propionate, phosphate, borate, thiocyanate et sulfonate, les ions de type halogène étant préférés.
- $R_5$, $R_6$ et $R_7$, qui peuvent être identiques ou différents, représentent des radicaux alkyle, alkyle substitué, alcène, aryle ou aralkyle.

**6.** Utilisation selon la revendication 5, caractérisée par le fait que la quantité efficace d'agent est comprise entre 10 et 95 % en poids sec/sec.

**7.** Utilisation selon l'une des revendications 5 et 6, caractérisée par le fait que l'adjuvant contient également au moins un additif choisi dans le groupe comprenant les agents réducteurs d'eau, les agents accélérateurs ou retardateurs de prise, les agents anticorrosion, les agents aérateurs, les fluidifiants, les plastifiants, les dérivés chlorés, les oléfines époxydées éventuellement aminées et les agents de rhéologie du type dérivés cellulosiques ou dérivés acryliques.

**8.** Utilisation selon l'une quelconque des revendications 1 à 7, caractérisée par le fait que l'agent ou l'adjuvant sont introduits en une quantité efficace dans l'eau de gâchage destinée à la préparation des mortiers et des bétons.

**9.** Composition de' ciment, de mortier ou de béton, comportant une quantité efficace d'un agent répondant à la formule :

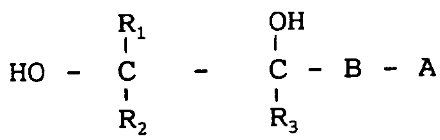

dans laquelle

- $R_1$, $R_2$ et $R_3$, qui peuvent être identiques ou différents, représentent l'atome d'hydrogène ou un groupe alkyle, alkyle substitué, alcène, aryle ou aralkyle,
- B représente une chaîne hydrocarbonée comportant au moins un motif $-CH_2-$ et dont le nombre de carbones situés sur la chaîne est inférieur ou égal à 10,
- A représente les groupements :

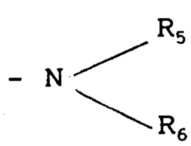 , 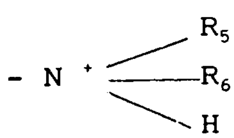 , $X^-$ ; 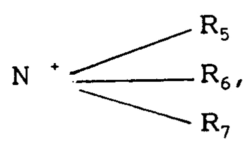 $X^-$

dans lesquels :

- X représente un anion organique ou inorganique choisi dans le groupe comprenant les ions de type halogène, nitrate, nitrite, sulfate, sulfite, thiosulfate, acétate, adipate, citrate, gluconate, p-tosylate, formiate, propionate, phosphate, borate, thiocyanate et sulfonate, les ions de type halogène étant préférés.
- $R_5$, $R_6$ et $R_7$, qui peuvent être identiques ou différents, représentent des radicaux alkyle, alkyle substitué, alcène, aryle ou aralkyle,
  pour augmenter leur vitesse de durcissement tout en maintenant ou en améliorant le temps de leur maniabilité.

**10.** Composition de ciment, de mortier ou de béton selon la revendication 9, caractérisée par le fait que l'agent répond à la formule

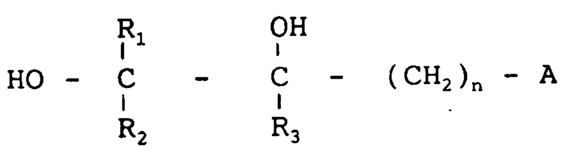

- $R_1$, $R_2$, $R_3$ et A ont les mêmes significations que celles données précédemment
  et où

$$-1 \leq n \leq 6$$

**11.** Composition de ciment, de mortier ou de béton selon l'une ou l'autre des revendications 9 et 10, caractérisée par le fait que $R_1$, $R_2$ et $R_3$ représentent des radicaux alkyle en $C_1$ à $C_4$.

**12.** Composition de ciment, de mortier ou de béton selon l'une quelconque des revendications 9 à 11, caractérisée par le fait que l'agent répond à la formule :

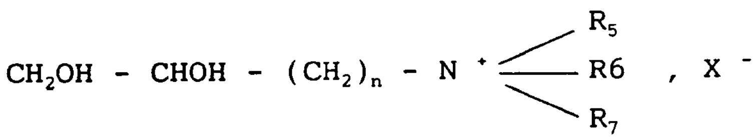

dans laquelle :

- $R_5$, $R_6$ et $R_7$, qui peuvent être identiques ou différents, sont des radicaux alkyle en $C_1$ à $C_4$,

$- 1 \leq n \leq 5$

**13.** Composition de ciment, de mortier ou de béton selon l'une quelconque des revendications 9 à 12, caractérisée par le fait qu'elle comprend une quantité d'agent de 0,001 à 2 %, de préférence de 0,01 à 1,5 % et plus préférentiellement encore de 0,015 à 1 % en poids sec/sec par rapport au poids de ciment.

## Claims

**1.** Use of an agent corresponding to the formula :

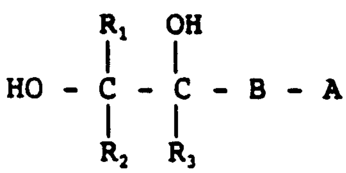

in which

- $R_1$, $R_2$ and $R_3$, which may be identical or different, denote the hydrogen atom or an alkyl, substituted alkyl, alkene, aryl or aralkyl group,
- B denotes a hydrocarbon chain containing at least one $-CH_2-$ unit and in which the number of carbons situated in the chain is smaller than or equal to 10,
- A denotes the groups:

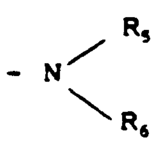 , 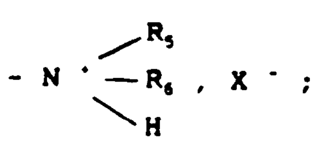 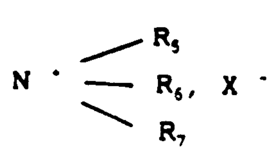

in which:

- X denotes an organic or inorganic anion chosen from the group comprising ions of halogen, nitrate, nitrite, sulfate, sulfite, thiosulfate, acetate, adipate, citrate, gluconate, p-tosylate, formate, propionate, phosphate, borate, thiocyanate and sulfonate type, ions of halogen type being preferred,
- $R_5$, $R_6$ and $R_7$, which may be identical or different, denote alkyl, substituted alkyl, alkene, aryl or arakyl radicals, to increase the rate of hardening of cements, mortars and concretes while maintaining or improving the

time of their workability.

**2.** Use according to claim 1, characterized in that the agent corresponds to the formula:

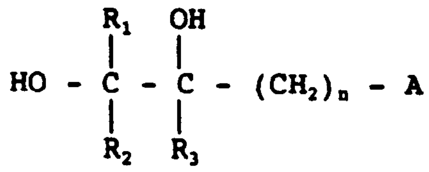

where

- $R_1$, $R_2$, $R_3$ and A have the same meanings as those given above, and where

$$1 \leq n \leq 6.$$

**3.** Use according to either of claims 1 and 2, characterized in that $R_1$, $R_2$ and $R_3$ denote $C_1$-$C_4$ alkyl radicals.

**4.** Use according to any one of claims 1 to 3, characterized in that the agent corresponds to the formula:

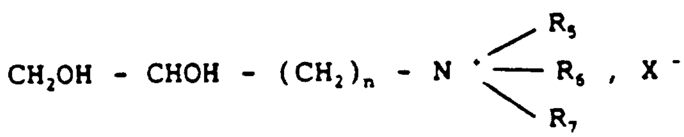

in which:

- $R_5$, $R_6$ and $R_7$, which may be identical or different, are $C_1$-$C_4$ alkyl radicals,

$$1 \leq n \leq 5.$$

**5.** Use of an adjuvant for cements, mortars and concretes to increase their rate of hardening while maintaining or improving their workability, characterized in that said adjuvant contains an efficient quantity of at least one agent corresponding to the formula:

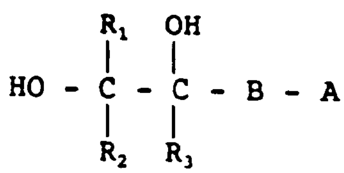

in which

- $R_1$, $R_2$ and $R_3$, which may be identical or different, denote the hydrogen atom or an alkyl, substituted alkyl, alkene, aryl or aralkyl group,
- B denotes a hydrocarbon chain containing at least one $-CH_2-$ unit and in which the number of carbons situated in the chain is smaller than or equal to 10,
- A denotes the groups:

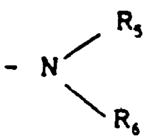 , 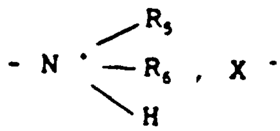 ; 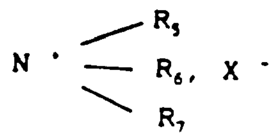

in which:

- X denotes an organic or inorganic anion chosen from the group comprising ions of halogen, nitrate, nitrite, sulfate, sulfite, thiosulfate, acetate, adipate, citrate, gluconate, p-tosylate, formate, propionate, phosphate, borate, thiocyanate and sulfonate type, ions of halogen type being preferred,
- $R_5$, $R_6$ and $R_7$, which may be identical or different, denote alkyl, substituted alkyl, alkene, aryl or arakyl groups.

**6.** Use according to claim 5, characterized in that the efficient quantity of agent is between 10 to 95% by weight dry/dry.

**7.** Use according to one of claims 5 and 6, characterized in that the adjuvant also contains at least one additive chosen from the group comprising water-reducing agents, setting-accelerating or retarding agents, anticorrosion agents, aerating agents, fluidfying agents, plasticizers, chlorinated derivatives, optionally aminated epoxidized olefins and rheology modifiers of the cellulose derivative or acrylic derivative type.

**8.** Use according to any one of claims 1 to 7, characterized in that the agent or the adjuvant are introduced in an effective quantity into the mixing water intended for the preparation of mortars or concretes.

**9.** Cement, mortar or concrete composition comprising an effective quantity of an agent corresponding to the formula:

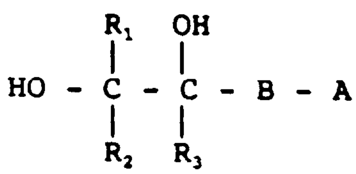

in which

- $R_1$, $R_2$ and $R_3$, which may be identical or different, denote the hydrogen atom or an alkyl, substituted alkyl, alkene, aryl or aralkyl group,
- B denotes a hydrocarbon chain containing at least one $-CH_2-$ unit and in which the number of carbons situated in the chain is smaller than or equal to 10,
- A denotes the groups:

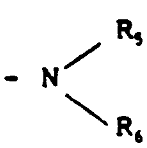 , 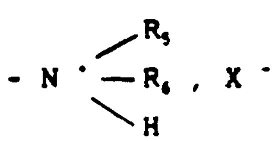 ; 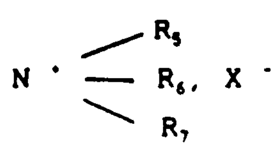

in which:

- X denotes an organic or inorganic anion chosen from the group comprising ions of halogen, nitrate, nitrite, sulfate, sulfite, thiosulfate, acetate, adipate, citrate, gluconate, p-tosylate, formate, propionate, phosphate, borate, thiocyanate and sulfonate type, ions of halogen type being preferred,

- $R_5$, $R_6$ and $R_7$, which may be identical or different, denote alkyl, substituted alkyl, alkene, aryl or arakyl radicals, to increase the rate of hardening of cements, mortars and concretes while maintaining or improving the time of their workability.

**10.** Cement, mortar or concrete composition according to claim 9, characterized by the fact that the agent corresponds to the formula:

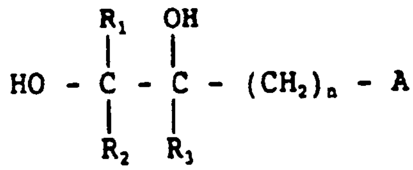

where

- $R_1$, $R_2$, $R_3$ and A have the same meanings as those given above, and where

$- 1 \leq n \leq 6.$

**11.** Cement, mortar or concrete composition according to either of claims 9 and 10, characterized in that $R_1$, $R_2$ and $R_3$ denote $C_1$-$C_4$ alkyl radicals.

**12.** Cement, mortar or concrete composition according to any one of claims 9 to 11, characterized in that the agent corresponds to the formula :

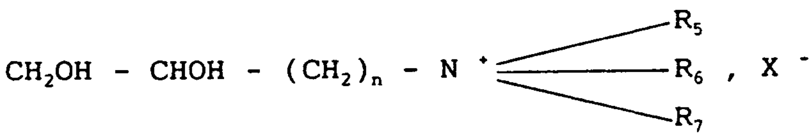

in which :

- $R_5$, $R_6$ and $R_7$, which may be identical or different, are $C_1$-$C_4$ alkyl radicals,

$- 1 \leq n \leq 5.$

**13.** Cement, mortar or concrete composition according to either of claims 9 to 12, characterized in that it comprises a quantity of agent from 0.001 to 2%, preferably from 0.01 to 1.5% and still more preferably from 0.015 to 1% by weight relative to the weight of cement on dry/dry bases.

**Patentansprüche**

**1.** Verwendung eines Mittels entsprechend der Formel

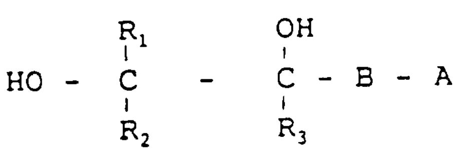

worin

- $R_1$, $R_2$ und $R_3$, die identisch oder verschieden sein können, das Wasserstoffatom oder eine Alkyl-, substituierte

Alkyl-, Alken-, Aryl- oder Aralkylgruppe bedeuten,

- B eine Kohlenwasserstoffkette mit mindestens einer Gruppierung $-CH_2-$ darstellt und deren Anzahl der Kohlenstoffe, die sich auf der Kette befinden, unterhalb oder gleich 10 ist,

- A die Gruppierungen

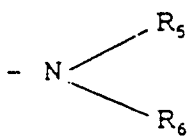 , 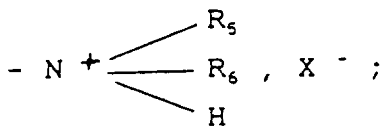 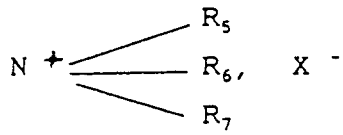

bedeuten, worin

- X ein organisches oder anorganisches Anion bedeutet, ausgewählt aus der Gruppe umfassend die Ionen vom Typ Halogen, Nitrat, Nitrit, Sulfat, Sulfit, Thiosulfat, Acetat, Adipat, Zitrat, Gluconat, p-Tosylat, Formiat, Propionat, Phosphat, Borat, Thiocyanat und Sulfonat, wobei die Ionen vom Halogentyp bevorzugt sind,
- $R_5$, $R_6$ und $R_7$, die identisch oder verschieden sein können, Alkyl-, substituiertes Alkyl-, Alken-, Aryl- oder Aralkylreste bedeuten,

zur Erhöhung der Härtungsgeschwindigkeit von Zementen, Mörteln und Betonen, wobei die Zeit ihrer Verarbeitbarkeit oder Bearbeitbarkeit aufrechterhalten bleibt oder verbessert wird.

2. Verwendung gemäß Anspruch 1, dadurch gekennzeichnet, daß das Mittel der Formel

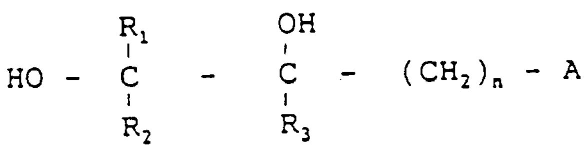

entspricht, wobei

- $R_1$ , $R_2$, $R_3$ und A die gleichen Bedeutungen wie vorstehend angegeben haben, und wo

$$- 1 \leq n \leq 6 \text{ ist.}$$

3. Verwendung gemäß einem der Ansprüche 1 und 2, dadurch gekennzeichnet, daß $R_1$, $R_2$ und $R_3$ Alkylreste von $C_1$ bis $C_4$ bedeuten.

4. Verwendung gemäß einem der Ansprüche 1 bis 3, dadurch gekennzeichnet, daß das Mittel der Formel

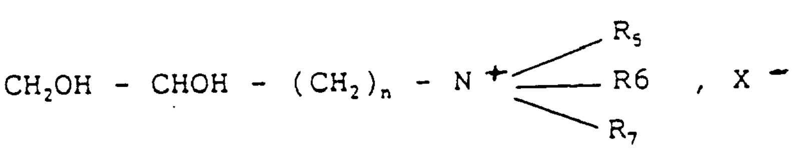

entspricht, worin:

- $R_5$, $R_6$ und $R_7$, die identisch oder verschieden sein können, Alkylreste mit $C_1$ bis $C_4$ sind,

$$- 1 \leq n \leq 5 \text{ ist.}$$

5. Verwendung eines Hilfsmittels für Zemente, Mörtel und Betone, um deren Aushärtungsgeschwindigkeit zu erhöhen, wobei gleichzeitig ihre Handhabbarkeit erhalten bleibt oder verbessert wird, dadurch gekennzeichnet, daß dieses Hilfsmittel eine wirksame Menge von mindestens einem Mittel entsprechend der Formel

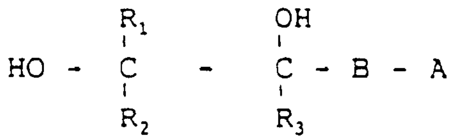

umfaßt, worin

- $R_1$, $R_2$ und $R_3$, die identisch oder verschieden sein können, das Wasserstoffatom oder eine Alkyl-, substituierte Alkyl-, Alken-, Aryl- oder Aralkylgruppe bedeuten,
- B eine Kohlenwasserstoffkette mit mindestens einer Gruppierung $-CH_2-$ darstellt und deren Kohlenstoffanzahl, die sich auf der Kette befinden, unterhalb oder gleich 10 ist,
- A die Gruppierungen

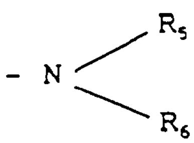 , 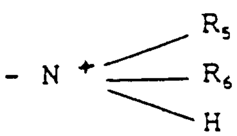 , $X^-$ ; 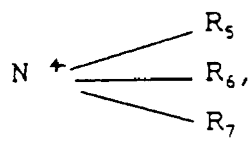 $X^-$

bedeutet, worin:

- X ein organisches oder anorganisches Anion bedeutet, ausgewählt aus der Gruppe umfassend die Ionen vom Typ Halogen, Nitrat, Nitrit, Sulfat, Sulfit, Thiosulfat, Acetat, Adipat, Zitrat, Gluconat, p-Tosylat, Formiat, Propionat, Phosphat, Borat, Thiocyanat und Sulfonat, wobei die Ionen vom Halogentyp bevorzugt sind,
- $R_5$, $R_6$ und $R_7$, die identisch oder verschieden sein können, Alkyl-, substituiertes Alkyl-, Alken-, Aryl- oder Aralkylreste bedeuten.

6. Verwendung gemäß Anspruch 5, dadurch gekennzeichnet, daß die wirksame Menge des Mittels zwischen 10 und 95 Gew.-% trocken/trocken liegt.

7. Verwendung gemäß einem der Ansprüche 5 und 6, dadurch gekennzeichnet, daß das Hilfsmittel auch mindestens einen Zusatz enthält, ausgewählt aus der Gruppe bestehend aus den wasserreduzierenden Mitteln, den das Abbinden beschleunigenden oder verzögernden Mitteln, den Antikorrosionsmitteln, den Belüftungsmitteln, den Fluidifiziermitteln, Plastifiziermitteln, chlorierten Derivaten, den gegebenenfalls aminierten epoxidierten Olefinen und den rheologischen Mitteln vom Typ Cellulosederivate oder Acrylderivate.

8. Verwendung gemäß einem der Ansprüche 1 bis 7, dadurch gekennzeichnet, daß das Mittel oder Hilfsmittel in einer wirksamen Menge im Anrührwasser, das zur Herstellung der Mörtel und Betone bestimmt ist, eingeführt werden.

9. Zement-, Mörtel- oder Betonzusammensetzung umfassend eine wirksame Menge eines Mittels entsprechend der Formel:

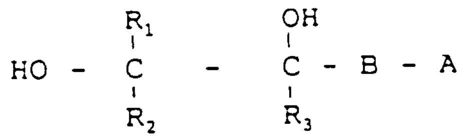

worin

- $R_1$, $R_2$ und $R_3$, die identisch oder verschieden sein können, das Wasserstoffatom oder eine Alkyl-, substituierte Alkyl-, Alken-, Aryl- oder Aralkylgruppe bedeuten,

- B eine Kohlenwasserstoffkette mit mindestens einer Gruppierung $-CH_2-$ darstellt und deren Anzahl der Kohlenstoffe, die sich auf der Kette befinden, unterhalb oder gleich 10 ist,

- A die Gruppierungen

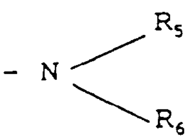 , 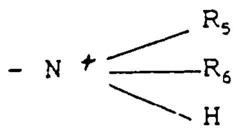 , $X^-$ ; 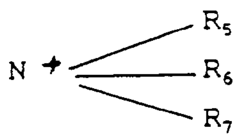 $X^-$

bedeuten, worin

- X ein organisches oder anorganisches Anion bedeutet, ausgewählt aus der Gruppe umfassend die Ionen vom Typ Halogen, Nitrat, Nitrit, Sulfat, Sulfit, Thiosulfat, Acetat, Adipat, Zitrat, Gluconat, p-Tosylat, Formiat, Propionat, Phosphat, Borat, Thiocyanat und Sulfonat, wobei die Ionen vom Halogentyp bevorzugt sind,

- $R_5$, $R_6$ und $R_7$, die identisch oder verschieden sein können, Alkyl-, substituiertes Alkyl-, Alken-, Aryl- oder Aralkylreste bedeuten,

um deren Härtungsgeschwindigkeit zu erhöhen, wobei gleichzeitig die Zeit der Verarbeitbarkeit oder Bearbeitbarkeit aufrechterhalten bleibt oder verbessert wird.

**10.** Zement-, Mörtel- oder Betonzusammensetzung gemäß Anspruch 9, dadurch gekennzeichnet, daß das Mittel der Formel

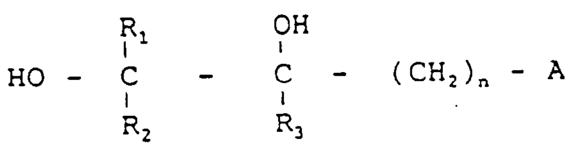

entspricht, wobei

- $R_1$, $R_2$, $R_3$ und A die gleichen Bedeutungen wie die vorstehend angegebenen haben, und wo

$- 1 \leq n \leq 6$ ist.

**11.** Zement-, Mörtel- oder Betonzusammensetzung gemäß einem der Ansprüche 9 und 10, dadurch gekennzeichnet, daß $R_1$, $R_2$ und $R_3$ Alkylreste mit $C_1$ bis $C_4$ darstellen.

12. Zement-, Mörtel- oder Betonzusammensetzung gemäß einem der Ansprüche 9 bis 11, dadurch gekennzeichnet, daß das Mittel der Formel

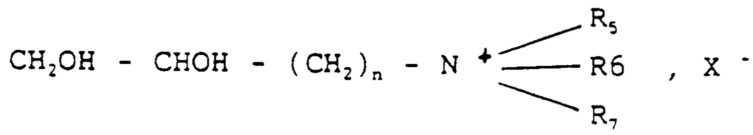

entspricht, worin:

- $R_5$, $R_6$ und $R_7$, die identisch oder verschieden sein können, $C_1$ bis $C_4$- Alkylreste sind,

- $1 \leq n \leq 5$ ist.

13. Zement-, Mörtel- oder Betonzusammensetzung gemäß einem der Ansprüche 9 bis 12, dadurch gekennzeichnet, daß sie eine Menge an Mittel von 0,001 bis 2 %, vorzugsweise von 0,01 bis 1,5 % und ganz bevorzugt von 0,015 bis 1 Gew.-% trocken/trocken in bezug auf das Zementgewicht umfaßt.

FIG.1.

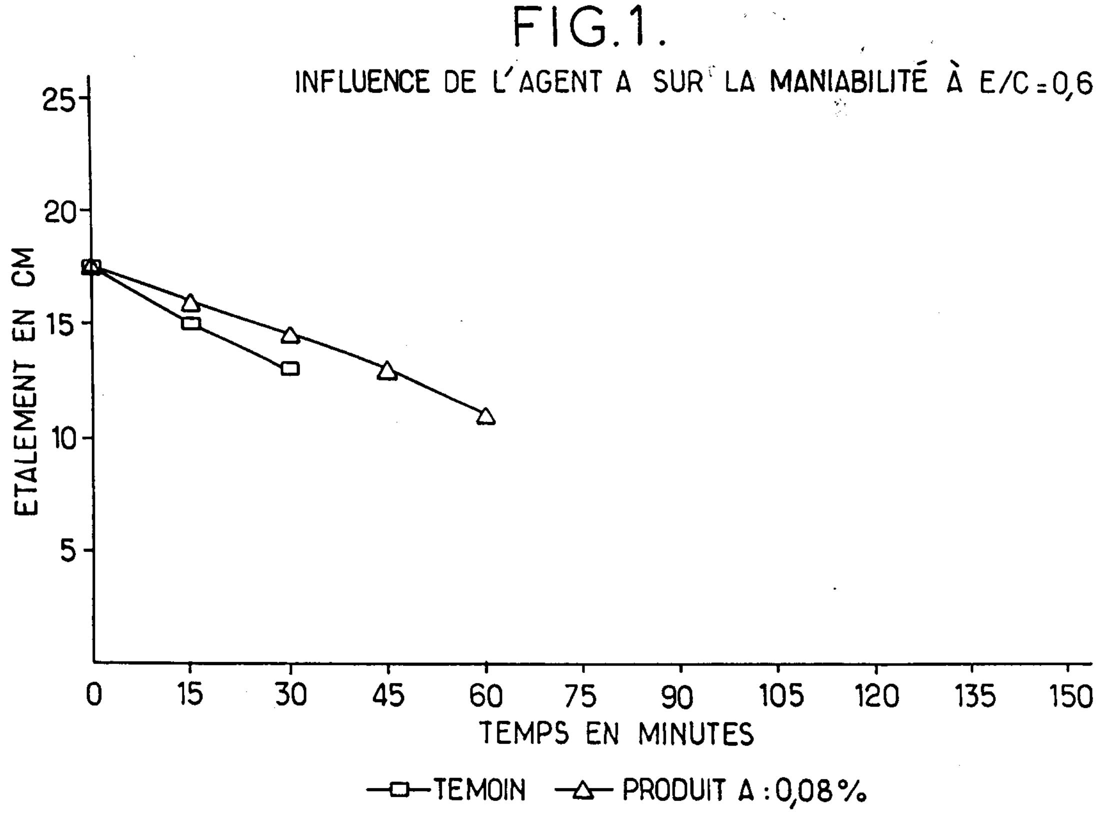
INFLUENCE DE L'AGENT A SUR LA MANIABILITÉ À E/C=0,6
ETALEMENT EN CM
25
20
15
10
5
0
15
30
45
60
75
90
105
120
135
150
TEMPS EN MINUTES
TEMOIN
PRODUIT A : 0,08 %

FIG.2.

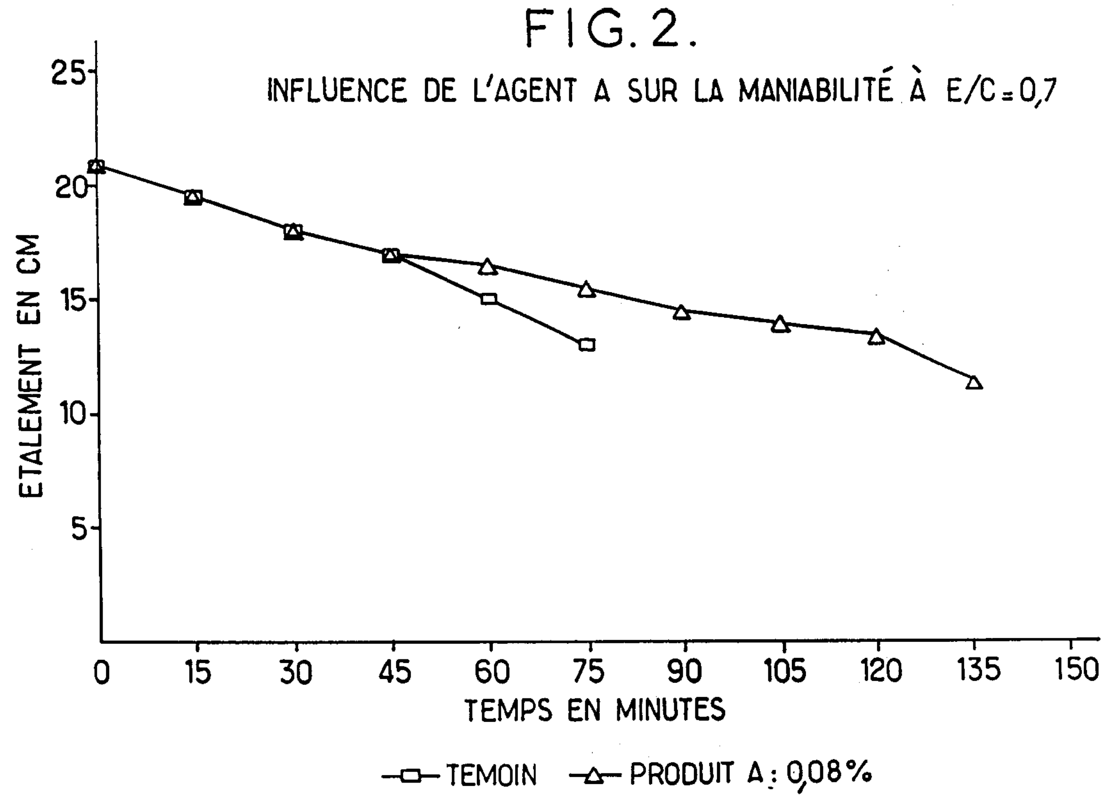
INFLUENCE DE L'AGENT A SUR LA MANIABILITÉ À E/C=0,7
ETALEMENT EN CM
25
20
15
10
5
0
15
30
45
60
75
90
105
120
135
150
TEMPS EN MINUTES
TEMOIN
PRODUIT A : 0,08 %

FIG.3.

ÉVOLUTION DE LA MANIABILITÉ DANS LE TEMPS

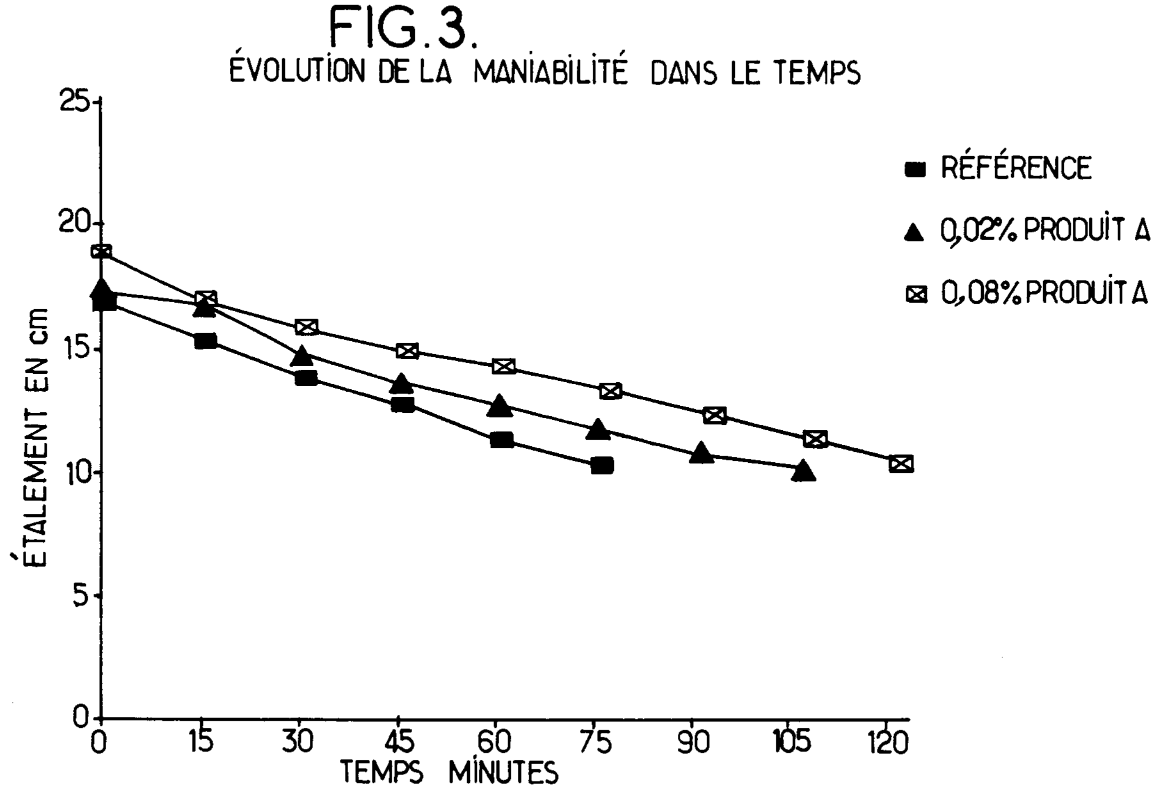


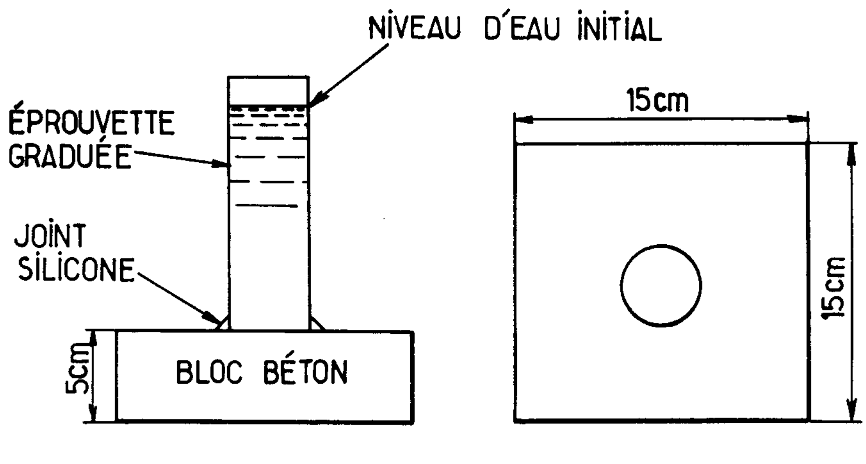


FIG.4.

PRINCIPE DE LA MESURE DE PERMÉABILITÉ

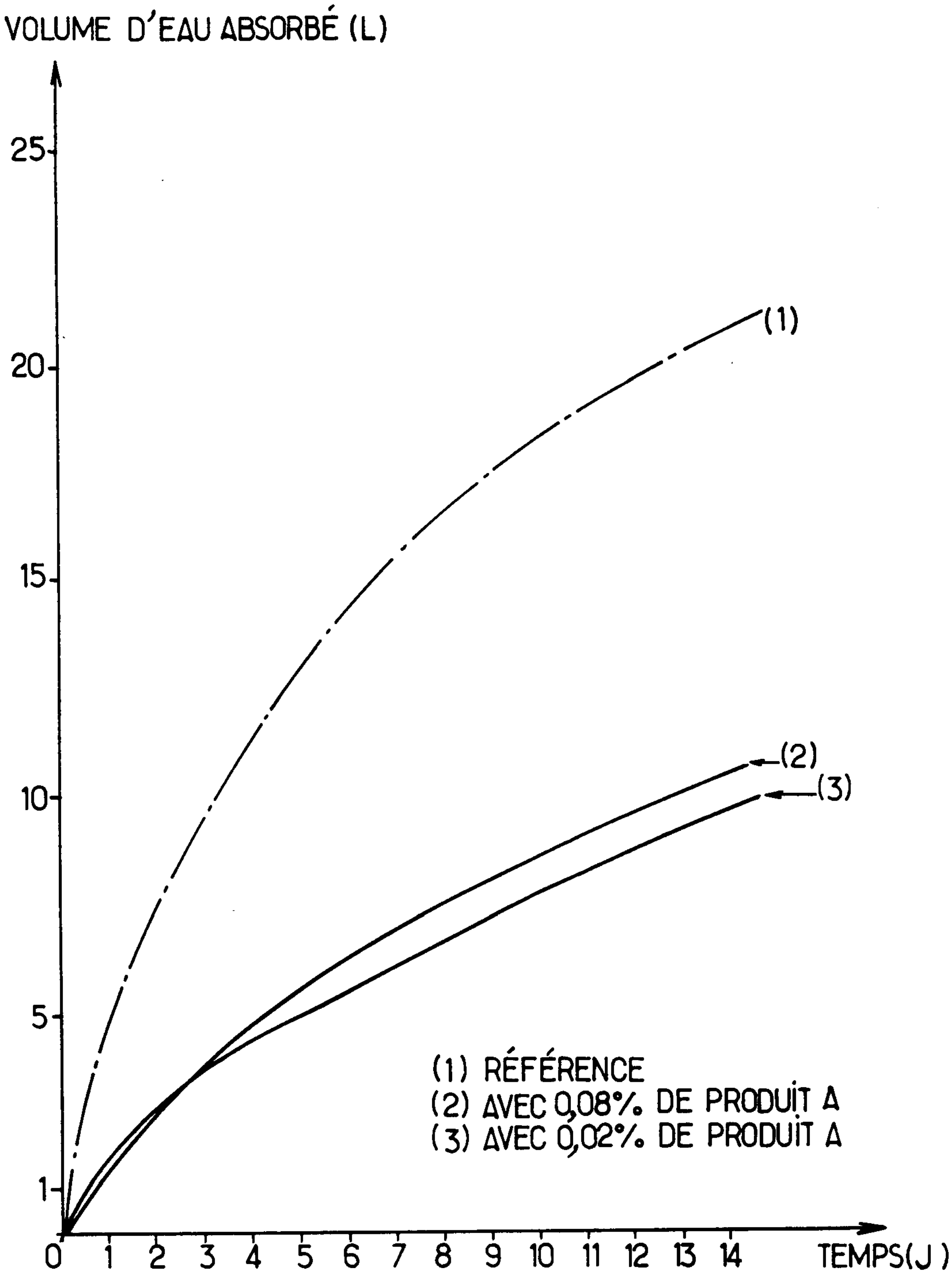


FIG.5.

ESSAI DE PERMÉABILITÉ SUR BLOC 5 x 15 x 15 $cm^3$
D'UN BÉTON DE DALLAGE